# EUROPÄISCHE PATENTSCHRIFT

(11) **EP 0 539 540 B1**
(45) Veröffentlichungstag und Bekanntmachung des Hinweises auf die Patenterteilung: **25.06.1997**
(21) Anmeldenummer: 92909088.4
(22) Anmeldetag: 07.05.1992
(51) Int. Cl.: H04Q 11/04

(54) **Anordnung mit mindestens einem an ein Fernmeldenetz anschliessbaren Rechner, sowie eine Anwendung dieser Anordnung**
Arrangement with at least one computer which is connectable to a telecommunications network, and a use of this arrangement
Arrangement avec au moins un ordinateur qui est raccordable à un réseau de télécommunication, et une utilisation de cet arrangement

(30) Priorität: 13.05.1991 CH 1418/91; 10.07.1991 CH 2047/91; 21.08.1991 CH 2453/91
(43) Veröffentlichungstag der Anmeldung: 05.05.1993
(60) Teilanmeldung: 96116235.1
(73) Patentinhaber: Siemens Schweiz AG, 8047 Zürich (CH)
(72) Erfinder: BURKART, Hans, CH-8048 Zürich (CH); FRISCHKNECHT, Urs, CH5452 Oberrohrdorf (CH); SKALSKY, Peter, CH-8048 Zürich (CH)
(86) Internationale Anmeldenummer: CH9200089
(87) Internationale Veröffentlichungsnummer: WO9221216

(56) Entgegenhaltungen:
- EP-A- 0 255 306
- EP-A- 0 359 156
- US-A- 4 700 340
- US-A- 4 736 409
- COMPUTER COMMUNICATION REVIEW. Bd. 19, Nr. 4, September 1989, NEW YORK US Seiten 191 - 196 J.W.BURREN 'Flexible aggregation of channel bandwidth in primary rate ISDN'
- ELECTRONIQUE INDUSTRIELLE. Nr. 145, 1. Juni 1988, PARIS FR Seiten 26 - 28 J.-M. ZULAUF 'Application de l'accès primaire RNIS'

## Beschreibung

Die vorliegende Erfindung betrifft eine Anordnung nach dem Oberbegriff des Patentanspruchs 1, sowie eine Anwendung der Anordnung.

Beim Integrated Services Digital Network (ISDN) sind grundsätzlich zwei verschiedene Teilnehmeranschlussarten vorgesehen: der Basisanschluss und der Primärratenanschluss. Der Primärratenanschluss kann seinerseits in die sogenannten Kanal-Strukturen weiter unterteilt werden. Man unterscheidet zwischen einer H1-Kanal-Struktur, einer H0-Kanal-Struktur, einer B-Kanal-Struktur und einer gemischten Struktur, wobei in der letztgenannten eine Kombination zwischen B- und H0-Kanälen gewählt werden kann. Während die übertragenen Daten der einzelnen B-, H0- und H1- Kanäle für die Vermittlung über das Fernmeldenetz keine Bedeutung haben (bit-transparente Übertragung), wird ein Signalisierungskanal (D- Kanal) für den Auf- und Abbau der Verbindungen innerhalb des Fernmeldenetzes benötigt. Bei Anschlüssen von ISDN- Teilnehmern an Rechnersysteme wurde bis anhin vom Basisanschluss oder allenfalls vom Primärratenanschluss mit H1-Kanal-Struktur ausgegangen. Die Anschlussart über den Basisanschluss, die eine maximale Übertragungsrate von 144 kBit/s zulässt, kann mit einem relativ bescheidenen schaltungstechnischen Aufwand pro Anschlusseinheit realisiert werden. Der Nachteil besteht jedoch in der kleinen Anzahl von Teilnehmeranschlüssen pro Anschlusseinheit, da beim Basisanschluss lediglich zwei B-Kanäle und ein D-Kanal vorgesehen sind. Werden zum Beispiel gleichzeitig 30 Teilnehmeranschlüsse benötigt, so müssen 15 Anschlusseinheiten zur Verfügung gestellt werden. Dieser grosse schaltungstechnische Aufwand erhöht einerseits die Kosten und den Wartungsaufwand, anderseits vermindert er die Zuverlässigkeit des Gesamtsystems. Die Anschlussart über den Primärratenanschluss in H1-Kanal-Struktur lässt wohl die vorgesehene Übertragungsrate von 2 MBit/s zu, ist aber lediglich für die Kommunikation zwischen zwei ISDN-Teilnehmern einsetzbar, d.h. die Übertragung erfolgt im Fernmeldenetz auf der ganzen Kanalbandbreite des Primärratenanschlusses bit-transparent. Für eine Schnittstellenbaugruppe zur Verarbeitung eines Primärratenanschlusses in B-Kanal-Struktur, welcher gemäss CCITT 1-431 dem Anwender 30 B-Kanäle (Basiskanäle) und einen D-Kanal (Hilfskanal) à 64 kBit/s zur Verfügung stellt und somit gleichzeitig 30 verschiedenen Teilnehmern den Zugriff auf einen Rechner ermöglicht, kann eine Schnittstellenbaugruppe zur Verarbeitung eines Primärratenanschlusses in H1-Kanal-Struktur nicht verwendet werden.

In "Computer Communication Review", Bd. 19, Nr.4, September 1989, New York, US, Seiten 191-196 (J.W. Burren) wird eine Methode und eine Anordnung zum Zusammenführen von 64 kBit-Datenströmen in einem Breitbandkanal beschrieben, wobei eine flexible Anpassung der Bandbreite des Breitbandkanals durch Einfügen oder Entfernen von 64 kBit-Datenströmen erfolgt und der Breitbandkanal somit immer eine Übertragungsfrequenz von n x 64 kBit/s (n= Anzahl 64 kBit-Datenströme) aufweist.

Der vorliegenden Erfindung liegt die Aufgabe zugrunde, eine Anordnung zum Anschliessen eines Rechners an ein digitales, öffentliches oder privates Fernmeldenetz derart anzugeben, dass eine grosse Anzahl mit dem Netz verbundene Teilnehmerendgeräte gleichzeitig über das Netz auf einen Rechner zugreifen können.

Diese Aufgabe wird durch die im kennzeichnenden Teil des Patentanspruchs 1 angegebenen Massnahmen gelöst. Vorteilhafte Ausgestaltungen der Erfindung sowie eine verwendung sind in weiteren Ansprüchen angegeben.

Die Erfindung weist folgende Vorteile auf: Eine grosse Anzahl kostengünstiger Endgeräte können gleichzeitig über das bestehende private oder öffentliche Fernmeldenetz an eine zentrale Computeranlage angeschlossen werden. Dies ist nicht nur bei kleineren Teilnehmervermittlungsanlagen in privaten Netzen - wie zum Beispiel in Unternehmen - vorteilhaft, sondern lässt sich auch über das öffentliche Fernmeldenetz ohne besonderen Aufwand realisieren. Auf die Installation einer teuren firmenweiten LAN-Verkabelung (Local Area Network) kann verzichtet werden und an deren Stelle können die vorhandenen Leitungen von privaten oder öffentlichen Netzen für die Kommunikation einzelner Endgeräte mit einem Rechner verwendet werden. Ferner wird eine kompakt aufgebaute Schnittstellenbaugruppe verwendet, durch die nicht nur die Zuverlässigkeit des Gesamtsystems erheblich verbessert, sondern auch der Kostenaufwand gesenkt wird. Dank der softwaremässigen Realisierung der Bitratenadaption kann die Hardware der Schnittstellenbaugruppe auf allgemeine flexible Funktionen reduziert werden. Neue Bitratenadaptionsalgorith-men oder andere weitergehende Algorithmen können für die bestehende Hardware entwickelt werden, ohne dass eine Anpassung der Hardware erforderlich ist. Schliesslich erlaubt diese Schnittstellenbaugruppe, gleichzeitig alle 30 B-Kanäle eines Primärratenanschlusses zu verarbeiten.

Die Erfindung wird nachfolgend anhand von Zeichnungen beispielsweise näher erläutert. Dabei zeigt:
- Fig. 1:: den Einsatz der erfindungsgemässen Anordnung zur Verbindung von mehreren Endgeräten mit einem Rechner über ein öffentliches Fernmeldenetz
- Fig. 2:: den Einsatz der erfindungsgemässen Anordnung zur Verbindung von mehreren.Endgeräten mit einem Rechner über ein öffentliches und ein privates Fernmeldenetz
- Fig. 3:: den prinzipiellen Aufbau und eine mögliche Realisierung der Schnittstellenbaugruppe
- Fig. 4:: den Einsatz mehrerer Schnittstellenbaugruppen in einem Rechnerverbundsystem
- Fig. 5:: eine mögliche Unterteilung des in der Anordnung angewendeten Verfahrens zur Bitratenadaption in zwei Stufen
- Fig. 6:: einen pro Teilnehmerkanal vorgegebenen Datenstrom, der durch das Verfahren verarbeitet wird
- Fig. 7:: zwei Datensätze, in die der Datenstrom fortlaufend abwechslungsweise abgelegt wird
- Fig. 8:: einen Datensatz in verschiedenen Verarbeitungsphasen der in der zweiten Stufe ablaufenden Bitratenadaption
- Fig. 9:: ein Datenwort einer Dateneinheit mit zwei Suchfenstern für die Synchronisation des Datenstromes mit den Verarbeitungsphasen einer Recheneinheit
- Fig. 10:: eine Darstellung des Datenstromes vor der ersten Stufe der Bitratenadaption während mehreren Verarbeitungstakten
- Fig. 11:: eine Dateneinheit in verschiedenen Phasen eines Verabeitungstaktes bei der Vorbereitung zur Datenextraktion
- Fig. 12:: eine Dateneinheit zusammen mit einem Extraktionswort in verschiedenen Phasen des Verarbeitungstaktes während der Datenextraktion

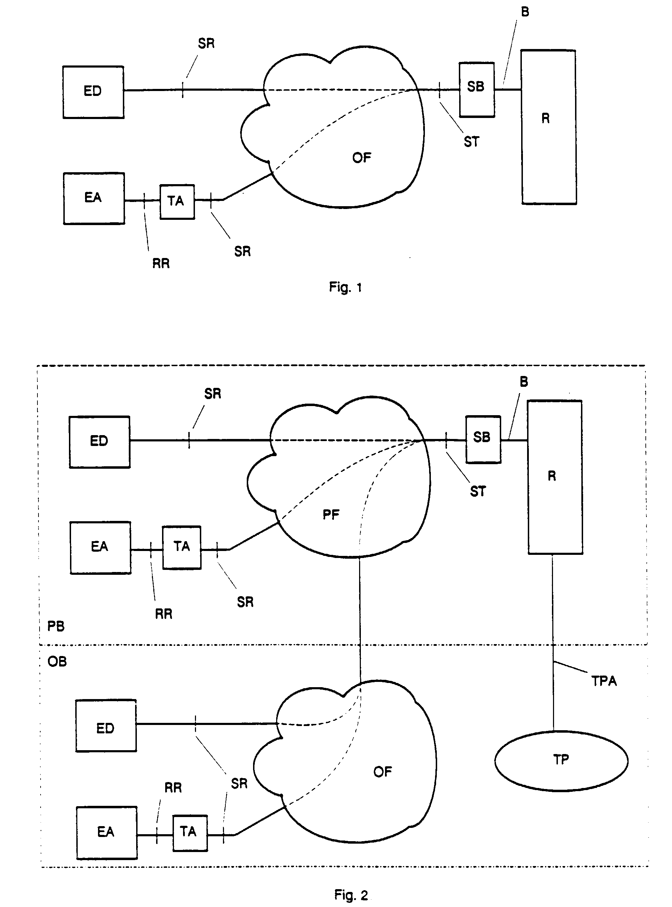

Fig. 1 zeigt den beispielsweisen Einsatz einer Schnittstellenbaugruppe SB zusammen mit einem Rechner R in einem öffentlichen digitalen Fernmeldenetz OF. Die Arbeitsweise sowie die Schnittstellen des Fernmeldenetzes OF sind international weitgehend normiert und unter dem Sammelbegriff "Integrated Services Digital Network", kurz ISDN, bekannt. Die Schnittstellenbaugruppe SB ist auf der einen Seite direkt über einen Primärratenanschluss am S/T-Referenzpunkt ST (auch S2 genannt) des Fernmeldenetzes OF und auf der anderen Seite über ein Bussystem B an den Rechner R angeschlossen. Teilnehmer des Fernmeldenetzes OF, die entweder über ein rein digitales Endgerät ED oder über ein entweder aus digitalen und analogen oder aus rein analogen Teilen bestehendes Endgerät EA verfügen, das über einen R-Referenzpunkt RR mit einem Terminal Adapter TA verbunden ist, können über S-Referenzpunkte SR, vorzugsweise über Basisanschlüsse, mit dem Fernmeldenetz OF in Verbindung treten und weiter zum Beispiel über den S/T-Referenzpunkt ST und die Schnittstellenbaugruppe SB mit dem Rechner R Kontakt aufnehmen. Die entsprechenden Verbindungen innerhalb des Fernmeldenetzes OF sind in der Figur mit gestrichelten Linien angedeutet.

Soll der Rechner R mit mehreren Teilnehmern bzw. Endgeräten EA und ED, gleichzeitig kommunizieren, muss auch eine entsprechende Anzahl von B-Kanälen gleichzeitig zur Verfügung stehen. Mit zunehmender Anzahl von benötigten B-Kanälen werden die wirtschaftlichen Vorteile eines Primärratenanschlusses gegenüber den für eine äquivalente Übertragungskapazität benötigten Basisanschlüssen immer deutlicher. Dank der Schnittstellenbaugruppe SB, an die der Primärratenanschluss im S/T-Referenzpunkt ST direkt angeschlossen werden kann, können 30 Teilnehmer gleichzeitig von jedem beliebigen Standort aus ihre Kommunikationsfunktionen abwickeln. Auf diese Weise kann der Rechner R zum Datenaustausch zwischen Endgeräten ED und/oder EA und dem Rechner R beispielsweise in folgenden VANS (Valued Added Network Services) eingesetzt werden: X.400-Message Handling, ODA/ODIF-Anwendungen, EDI (engl. Electronic Data Interchange), öffentliche Datenbanken, öffentliche Gateways oder öffentliche Informationsanbieter (zum Beispiel bei Abfrage des Verkaufsangebotes in Warenhäusern).
Um an diesen Diensten zu partizipieren, ist es für den ISDN-Teilnehmer ausreichend, wenn er über ein einfaches mit einem Terminal Adapter TA gekoppeltes entweder aus digitalen und analogen oder auch aus rein analogen Teilen bestehendes Endgerät EA oder ein rein digitales Endgerät ED mit integriertem ISDN- Anschluss verfügt.

In Fig. 2 ist der Rechner R über die Schnittstellenbaugruppe SB mit einem privaten digitalen Fernmeldenetz PF verbunden, das zumindest eine Teilnehmervermittlungsanlage aufweist. Teilnehmervermittlungsanlagen werden häufig in Unternehmen oder staatlichen Verwaltungen verwendet, wobei, wie in Fig. 2 gezeigt, Verbindungen zu digitalen oder zu analogen öffentlichen Fernmeldenetzen OF möglich sind. Der Rechner R, der sich im privaten Bereich PB befindet und mit der Schnittstellenbaugruppe SB ausgerüstet ist, ist beim S/T-Referenzpunkt ST über einen Primärratenanschluss mit dem privaten Fernmeldenetz PF verbunden. Über das mit dem Terminal Adapter TA ausgerüstete entweder aus digitalen und analogen oder aus rein analogen Teilen bestehende Endgerät EA oder über das rein digitale Endgerät ED haben sowohl Teilnehmer des öffentlichen als auch des privaten Fernmeldenetzes OF bzw. PF Zugriff auf den Rechner R.
Somit sind die im Rechner R installierten Anwendungsprogramme von Endgeräten ED und EA, die mit dem öffentlichen oder privaten Fernmeldenetz OF bzw. PF verbunden sind. über die normalen Femmeldeleitungen zugänglich. Solche Dienste innerhalb des privaten Bereiches PB sind zum Beispiel eine private elektronische Post, private Datenbanken, private Gateways (wie zum Beispiel über einen Telepac- Anschluss TPA zu einem Teilnehmer TP), zentrale Server (für Programme. Back up's. etc.) und Lagerhaltungen (Registrierung von Mutationen, Abfragen).

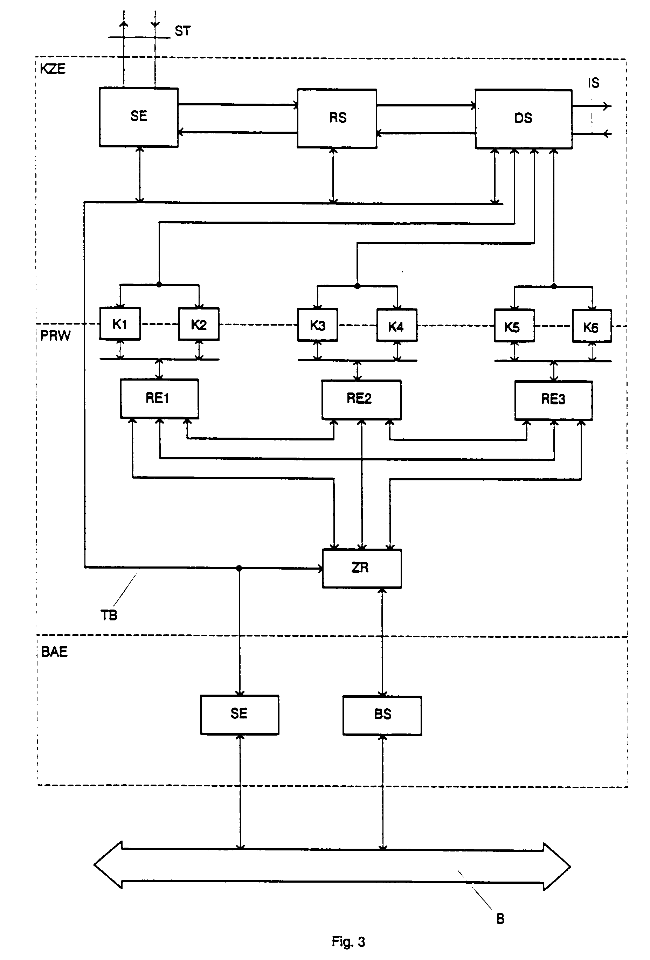

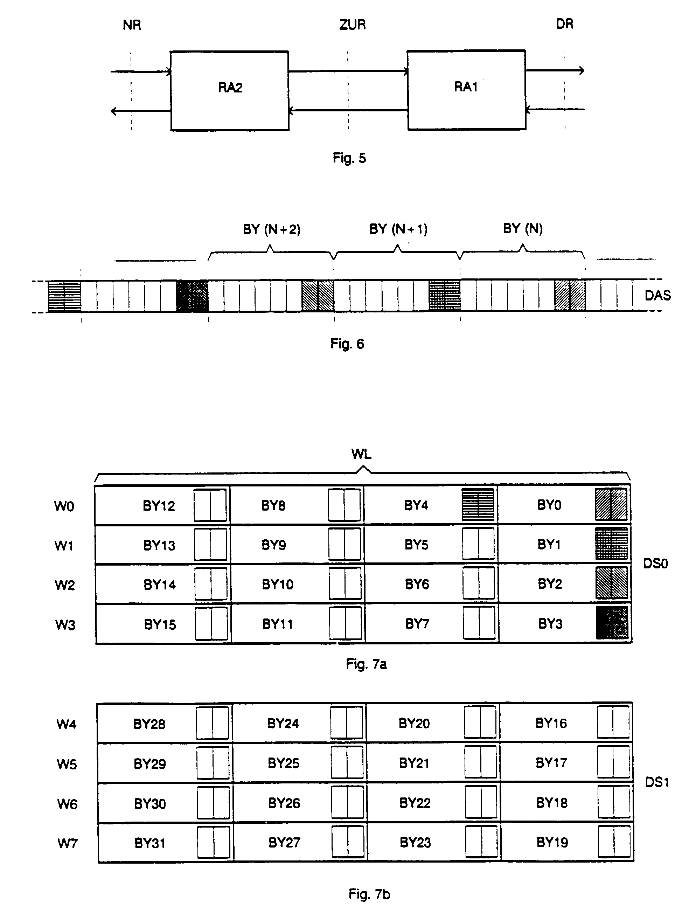

Fig. 3 zeigt eine mögliche Realisierung der Schnittstellenbaugruppe SB. Der prinzipielle Aufbau besteht aus einer Kanalzuweisungseinheit KZE, einem parallelen Rechenwerk PRW und einer Busanpassungseinheit BAE. Die Kanalzuweisungseinheit KZE, die über den S/T-Referenzpunkt ST an das Femmeldenetzes OF oder PF angeschlossen ist, ist vor allem aus elektronischen Komponenten aufgebaut, welche spezifisch fernmeldetechnische Funktionen ausüben. Dazu ist eine serielle Sende-Empfangseinheit SE vorgesehen, welche auf der einen Seite an den S/T-Referenzpunkt ST angeschlossen ist und auf der anderen Seite mit einem Rahmensynchronisator RS (engl. Frame Aligner) verbunden ist. Dieser ist seinerseits wiederum an eine Durchschalteeinheit DS angeschlossen, die an verschiedene Koppeleinheiten K1 bis K6 und auch über eine interne Schnittstelle IS nötigenfalls an weitere in Fig. 3 nicht dargestellte Durchschalteeinheiten mit entsprechenden Koppeleinheiten angeschlossen werden können. Die Sende-Empfangseinheit SE, der Rahmensynchronisator RS und die Durchschalteeinheit DS sind über einen Bus TB mit einem zentralen Rechner ZR verbunden. Bei einer Datenübertragungsrichtung vom Femmeldenetz OF oder PF in Richtung Rechner R (Fig. 1) empfängt die Sende-Empfangseinheit SE den über den S/T-Referenzpunkt ST seriell übertragenen Datenstrom und gibt diesen weiter an den Rahmensynchronisator RS. Gleichzeitig mit dem Datenempfang läuft auch das Senden der Daten in umgekehrter Richtung ab. Neben den Übertragungsfunktionen, die beispielsweise nach den vorgegebenen CCITT-Empfehlungen G.703. G.823, 1.431, G.732 und G.735 bis G.739 implementiert sind, wird in der Sende-Empfangseinheit SE auch eine Fehlererkennung durchgeführt. Das heisst, dass zum Beispiel beim Ausfall des Fernmeldenetzes OF bzw. PF oder der Schnittstellenbaugruppe SB der zentrale Rechner ZR über den Bus TB alarmiert wird. Weiter wird der im Fernmeldenetz OF bzw. PF zur Datenübertragung verwendete Takt aus dem empfangenen seriellen Datenstrom extrahiert und zur Synchronisation der Schnittstellenbaugruppe SB mit dem Fernmeldenetz OF bzw. PF verwendet. Dabei wird der gewonnene Takt vorzugsweise den Komponenten der Schnittstellenbaugruppe SB zugewiesen, die synchron zum Fernmeldenetz OF bzw. PF betrieben werden müssen. Der Rahmensynchronisator RS erkennt die Rahmenbegrenzungen, nämlich Rahmenanfang und -ende, welche beispielsweise nach der CCITT-Empfehlung G.732 kodiert sind. Zusätzlich kann der Rahmensynchronisator RS vom zentralen Rechner ZR überwacht und initialisiert werden. Auch hier werden fehlerhafte Funktionsabläufe dem Rechner ZR gemeldet. Die im Rahmensynchronisator RS entstehenden Synchronisationssignale werden zusammen mit den für diese Stufe bit-transparenten Daten an die Durchschalteeinheit DS weitergeleitet. Die Durchschalteeinheit DS, deren Durchschaltewege durch ein Programm im zentralen Rechner ZR über den Bus TB während der Initialisierungsphase fest, aber beliebig vorgegeben werden können, sendet die Daten der einzelnen 64 kBit/s-Kanäle (D- und B-Kanäle) den Koppeleinheiten K1 bis K6 zu. Gleichzeitig mit jedem Datenstrom pro B-Kanal wird ein Bytesynchronisationssignal an die entsprechenden Koppeleinheiten K1 bis K6 abgegeben. damit innerhalb des B-Kanal-Datenstromes jeder Byteanfang definiert ist. Beim Ausführungsbeispiel gemäss Fig. 3 können grundsätzlich pro Koppeleinheit K1 bis K6 zwei 64 kBit/s Kanäle verarbeitet werden, d.h. insgesamt zwölf 64 kBit/s- Kanäle. Dies bedingt bei der Verarbeitung aller 30 B-Kanäle und des D-Kanals eines Primärratenanschlusses zusätzliche Anschlussmöglichkeiten für weitere Koppeleinheiten. Dazu können, wie erwähnt, an die interne Schnittstelle IS weitere Durchschalteeinheiten DS in Kaskade und an diese auch zusätzliche Koppeleinheiten entsprechend der Anzahl der benötigten 64 kBit/s - Kanäle angeschlossen werden.
Die Koppeleinheiten K1 bis K6 bilden die eigentliche Schnittstelle zwischen der Kanalzuweisungseinheit KZE und dem parallelen Rechenwerk PRW der Schnittstellenbaugruppe SB. Während in der Kanalzuweisungseinheit KZE, wie bereits erwähnt, die spezifisch fernmeldetechnischen Funktionen ablaufen, werden im parallelen Rechenwerk PRW die anfallenden Daten der einzelnen Kanäle verarbeitet. Dazu ist ein zentraler Rechner ZR und mehrere Recheneinheiten RE1 bis RE3 vorgesehen. Jede Recheneinheit RE1 bis RE3 ist mit einem lokalen Speicher und den zur Dekodierung der Adressen benötigten Dekodierern ausgestattet und mit vorzugsweise zwei Koppeleinheiten K1,K2 bzw. K3,K4 bzw. K5,K6 verbunden. Eine Recheneinheit RE1, RE2 bzw. RE3 bildet zusammen mit den entsprechenden Koppeleinheiten K1,K2 bzw. K3,K4 bzw. K5,K6 einen Datenverarbeitungsblock. Weiter sind die Recheneinheiten RE1 bis RE3 unter sich und jede einzelne mit dem zentralen Rechner ZR verbunden. Der zentrale Rechner ZR bedient den bereits erwähnten Bus TB, über den zwischen der Kanalzuweisungseinheit KZE und der Busanpassungseinheit BAE Informationen ausgetauscht werden können. Durch die Vernetzung aller Recheneinheiten RE1 bis RE3 sowohl unter sich als auch mit dem zentralen Rechner ZR durch spezielle Verbindungen, wird eine Rechenleistung erreicht, die zur Verarbeitung von mindestens zwölf 64 kBit/s-Kanälen ausreicht. Jeweils vier dieser Kanäle werden in einem Datenverarbeitungsblock verarbeitet, wobei in diesem Ausführungsbeispiel je Koppeleinheit K1 bis K6 zwei Kanäle bearbeitet werden. Die Daten der vier pro Recheneinheit RE1 bis RE3 vorgesehenen Kanäle werden schliesslich an den zentralen Rechner ZR übergeben. Handelt es sich bei den Endgeräten ED und/oder EA um V.24/V.28-Endeinrichtungen, so arbeiten die Koppeleinheiten K1 bis K6 im bit-transparenten Modus und die Recheneinheiten RE1 bis RE3 führen eine Bitratenadaption vorzugsweise nach CCITT. Norm 1.460 und 1.463 (V.110) durch, wie dies anhand des in den Figuren 5 bis 12 erklärten Verfahrens beschrieben ist. Es können aber auch Endgeräte ED und/oder EA zum Einsatz gelangen, die nach dem HDLC-LAP-B (High Level Data Link Control - Link Access Procedure - Balanced) - Standard, dem SDLC (Synchronous Data Link Control) - Standard oder ähnlichen Standards arbeiten. Dies bedeutet, dass auch die Schnittstellenbaugruppe SB mit diesen Standards arbeiten muss. Eine schnelle Anpassung an einen dieser Standards ist durch das Laden einer neuen Softwareversion vom Rechner R über den zentralen Rechner ZR in die Recheneinheiten RE1 bis RE3 möglich. In diesem Ausführungsbeispiel kann zwischen dem HDLC-LAP-B-Standard und dem bit-transparenten Modus umgeschaltet werden, wobei sich der HDLC-LAP-B-Standard besonders gut eignet, da die Koppeleinheiten K1 bis K6 diesen hardwaremässig unterstützen.
Aufbauend auf diesen Standards können insbesondere folgende Protokolle verwendet werden: X.25. T.90, T.70, V.120 etc.
In der Busanpassungseinheit BAE der Schnittstellenbaugruppe SB erfolgt die Anpassung an ein normiertes Bussystem B, wie zum Beispiel an den Multibus I. Der modulare Aufbau der Schaltungsanordnung erlaubt es, das vorliegende Konzept auch für andere Bussysteme zu verwenden. Zu diesem Zweck ist es ausreichend, die Busanpassungseinheit BAE der Schnittstellenbaugruppe SB an das entsprechende Rechner-Bus-System anzupassen. Insbesondere kann anstelle des erwähnten Multibus sowohl ein nicht normiertes als auch ein normiertes Bussystem wie zum Beispiel der Multibus II, der VME-Bus, der Future-Bus, der EISA-Bus oder der PC-AT-Bus verwendet werden. Für die Anpassung an das gewählte Bussystem B ist auf der Schnittstellenbaugruppe SB eine bidirektionale Speichereinheit SE vorgesehen, die auf der einen Seite über den Bus TB mit dem zentralen Rechner ZR und auf der anderen Seite mit dem Bussystem B verbunden ist. Die Speichereinheit SE dient neben der Übergabe von Statusinformation hauptsächlich zur Pufferung ankommender und abgehender Daten. Weiter ist eine Bussteuereinheit BS vorhanden, die auf der Schnittstellenbaugruppe SB direkt an den zentralen Rechner ZR angeschlossen und auf der Seite des Rechners R ebenfalls auf das Bussystem B zugreift. Neben den üblichen Busfunktionen wie Arbitrierung, Lese- und Schreibzyklensteuerung erlaubt die Bussteuereinheit BS auch eine spezielle Initialisierungssteuerung, durch die die Schnittstellenbaugruppe SB initialisiert werden kann. Programmteile werden in der Initialisierungsphase vorzugsweise vom Rechner R geladen, damit in der Schnittstellenbaugruppe SB keine sogenannten ROMs (Read-Only-Memory) zur festen Speicherung des Initialisierungsprogramms vorhanden sein müssen.

Die universelle Anordnung der Schaltung von Fig. 3 lässt nicht nur die beliebige Zuteilung der B-Kanäle zu, sondern ermöglicht auch, dass die Bearbeitung des D-Kanals einer beliebigen Recheneinheit RE1, RE2 oder RE3 übergeben wird. Eine mögliche Konfiguration würde zum Beispiel darin bestehen, dass die Recheneinheit RE1 zusammen mit der Koppeleinheit K1 zur Verarbeitung des D-Kanals programmiert würde und die restlichen dargestellten Recheneinheiten RE2 und RE3 acht B-Kanäle verarbeiten würden.

Wie bereits kurz angedeutet, können für die Verarbeitung von mehr als zwölf B-Kanälen weitere Durchschalteeinheiten DS an die interne Schnittstelle IS angeschlossen werden, um die Kanalkapazität zu erhöhen. Sollen zum Beispiel alle 30 B-Kanäle und auch der entsprechende D-Kanal eines Primärratenanschlusses gleichzeitig verarbeitet werden, so müssen neben der in Fig. 3 gezeigten Schaltung zwei weitere hinzugefügt werden, jedoch ohne Sende-Empfangseinheiten SE und ohne Rahmensynchronisatoren RS. Die so in Modulen zu maximal zwölf 64 kBit/s-Kanälen stufenweise ausbaubare Schnittstellenbaugruppe SB kann auf diese Weise gezielt der Anzahl der Benützer, die gleichzeitig auf den Rechner R Zugriff haben sollen, angepasst werden. Denkbar wäre aber auch, dass alle Kanäle eines Primärratenanschlusses in einem Modul realisiert sind, in dem sich beispielsweise mehr als drei Recheneinheiten mit den entsprechenden Koppeleinheiten im gleichen Modul befinden, oder dass eine andere Kanalzuweisung zu den verschiedenen Koppeleinheiten gewählt wird.

Wie bereits erwähnt, sind zur Ablaufsteuerung des Datenflusses in der Schnittstellenbaugruppe SB Ablaufprogramme vorgesehen, welche sich in lokalen Speichern der Recheneinheiten RE1 bis RE3 und des zentralen Rechners ZR befinden. Diese Ablaufprogramme sind ebenfalls modular aufgebaut und vom Rechner R oder über das Fernmeldenetz OF oder PF von einem Endgerät ED oder EA in die Schnittstellenbaugruppe SB ladbar. So lassen sich Wartung, Erneuerung und Anpassungen der bestehenden Firmware sowie die Diagnose der Schnittstellenbaugruppe SB einfach bewerkstelligen.

Für die Recheneinheiten RE1 bis RE3 und für den zentralen Rechner ZR eignen sich Transputer wegen ihrer einfachen gegenseitigen Kopplung via den sogenannten "Links" besonders gut. Eine Realisierung mittels digitalen Signalprozessoren oder anderen Prozessoren, die bezüglich Rechenleistung diesen nicht nachstehen, ist ebenfalls möglich.

Für den Rahmensynchronisator RS und die Durchschalteeinheit DS können beispielsweise die Bausteine Advanced CMOS Frame Aligner (PEB 2035) bzw. Memory Time Switch (MTSC) von SIEMENS eingesetzt werden.

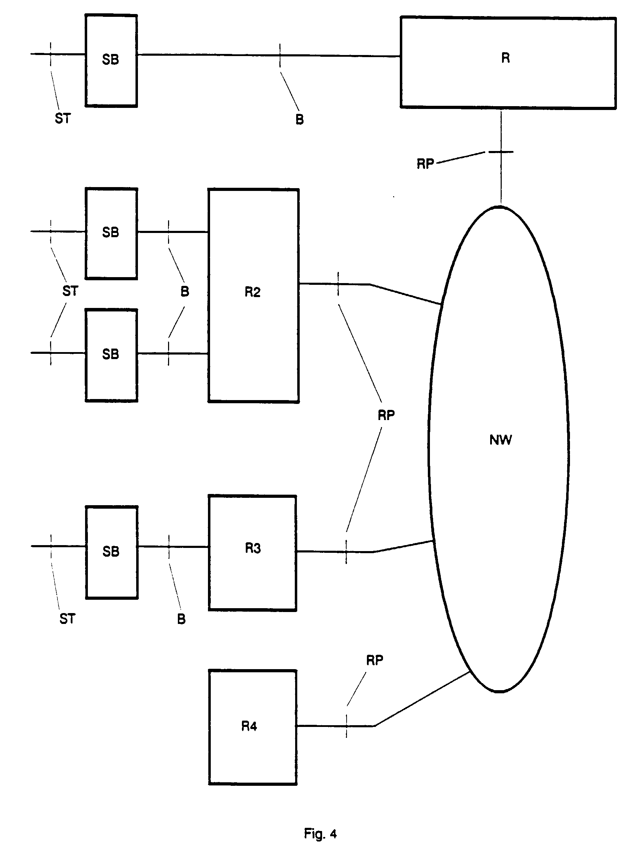

Fig. 4 zeigt einen möglichen Weiterausbau der in Fig. 1 und 2 dargestellten Anordnung zum Anschliessen eines Rechners R an ein Fernmeldenetz OF oder PF. Dabei wurde das Gesamtsystem im Sinne eines Rechnerverbundes erweitert. Eine erste Variante, welche in Fig. 4 nicht dargestellt ist aber bereits angedeutet wurde (LAN- Anwendung), betrifft eine Erweiterung auf der Basis der in Fig. 1 und 2 dargestellten Lösung: mehrere Rechner R sind am Fernmeldenetz OF oder PF angeschlossen, wobei die Rechner R auch über das Netz OF oder PF direkt miteinander kommunizieren können. In der zweiten in Fig. 4 dargestellten Variante sind verschiedene Rechner R, R2 und R3 über das Bussystem B an die Schnittstellenbaugruppen SB angeschlossen, welche ihrerseits über die S/T-Referenzpunkte ST an das Fernmeldenetz OF oder PF gekoppelt sind. Eine weitere Verbindungsmöglichkeit der Rechner R, R2 und R3 ergibt sich bei einem Anschluss über Referenzpunkte RP an ein Netzwerk NW, das beispielsweise als Ethernet realisiert ist. Durch diese Vernetzung ist die Ausbaubarkeit und Leistungsfähigkeit beinahe unbegrenzt erweiterbar: Eine grosse Anzahl von Endgeräten kann gleichzeitig mit verschiedenen Computersystemen kommunizieren. Auch können Rechner R3 in das Netzwerk NW eingebunden werden, die keine Daten speichern, sondern diese direkt an einen Hauptrechner wie zum Beispiel den Rechner R weiterleiten. An diese Rechner R3 werden keine hohen Leistungsanforderungen gestellt, d.h. eine kostengünstige Lösung kann beispielsweise mit dem Einsatz eines Personal Computers erreicht werden.

Schliesslich ist in Fig. 4 ein mit dem Netzwerk NW verbundener Rechner R4 vorgesehen, mit dem angedeutet wird, dass sich die Schnittstellenbaugruppe SB neben den beschriebenen VAN- Anwendungen und dem Rechnerverbundsystemen auch zur LAN/LAN- Kopplung (Local Area Network) über ISDN eignet. Einzelne abgesetzte Teilnehmer lassen sich in ein LAN einbinden und über ISDN-Fernmeldenetze OF oder PF mit weiteren ISDN-Teilnehmern verbinden.

In den folgenden Ausführungen zu den Figuren 5 bis 12 wird ein Verfahren zur Bitratenadaption beschrieben. Die Aufgabe der Bitratenadaption besteht in der eigentlichen Geschwindigkeitsanpassung der Netto-Bitrate der Endgeräte EA und ED (Fig. 1 und 2) an die Bitrate des Fernmeldenetzes OF bzw. PF durch Hinzufügen von Zusatz- und Füllinformation. Gleichzeitig soll die Bitratenadaption auch in die umgekehrte Richtung erfolgen. Diese Aufgabe wird durch einen Bitratenadaptionsalgorithmus gelöst, der im vorliegenden Ausführungsbeispiel auf den durch die CCITT-Empfehlungen 1.460 und 1.463 (V.110) vorgegebenen Angaben basiert. Eine softwaremässige Implementation des Algorithmus wirkt sich in dessen Wartungsfreundlichkeit besonders positiv aus, denn neue Anforderungen an den Algorithmus können dadurch schneller realisiert werden. Weiter kann das Verfahren beispielsweise in der Schnittstellenbaugruppe SB (Fig. 1 bis 4) bzw. in deren Recheneinheiten RE1 bis RE3 (Fig. 3) eingesetzt werden.

Fig. 5 zeigt eine mögliche Realisierung des erfindungsgemässen Verfahrens zur Bitratenadaption in zwei Bitratenadaptionsstufen RA1 und RA2. Die erste Bitratenadaptionsstufe RA1 passt eine auf der Seite der Endgeräte ED und/oder EA (Fig. 1 und 2) vorkommende Datenrate DR an eine Zwischenübertragungsrate ZUR an, welche von einer zweiten Bitratenadaptionsstufe RA2 an eine dem Fernmeldenetz OF bzw. PF entsprechende Netzrate NR angeglichen wird. Gleichzeitig erfolgt auch eine Bitratenadaption in umgekehrter Richtung, nämlich von der Netzrate NR über die zweite Bitratenadaptionsstufe RA2 zur Zwischenübertragungsrate ZUR und schliesslich über die erste Bitratenadaption RA1 zur Datenrate DR. Im vorliegenden Ausführungsbeispiel wird ein auf dem ISDN-Standard basierender B-Kanal an ein mit einer V.24/V.28 Schnittstelle ausgerüstetes Endgerät EA oder ED (Fig. 1 und 2) mit den folgenden Parametern angeschlossen: 1 Stopbit, 7 Datenbit, Übertragungsrate von 9.6 kBit/s, asynchroner Betrieb, XON/XOFF Fluss-Steuerung. Folgt man zur Realisierung dieser Bitratenadaption den CCITT-Empfehlungen, so erfolgt die Geschwindigkeitsanpassung in den beiden Bitratenadaptionsstufen RA1 und RA2 vorzugsweise nach CCITT-Empfehlung 1.460 bzw. 1.463 (V.110). Dies bedeutet, dass die Datenrate DR 9.6 kBit/s, die Netzrate NR 64 kBit/s und die Zwischenübertragungsrate ZUR 16 kBit/s beträgt.

In den Fig. 6 bis 12 wird die ganze Bitratenadaption anhand des Übergangs von der Netzrate NR des Fernmeldenetzes OF bzw. PF auf die Datenrate DR der Endgeräte EA bzw. ED über die beiden Bitratenadaptionsstufen RA2 und RA1 aufgezeigt.

Fig. 6 zeigt einen in seiner Länge theoretisch unbegrenzten Datenstrom DAS eines B-Kanales, wie er von der Durchschalteeinheit DS (Fig. 3) den Koppeleinheiten K1 bis K6 zugewiesen wird. Die relevanten Daten sind auf zwei Bit pro Byte BY begrenzt und im Datenstrom DAS von Fig. 6 durch unterschiedliche Schraffuren und durch die fortlaufende Normerierung der ersten Bytes speziell gekennzeichnet. Die Recheneinheiten RE1 bis RE3 (Fig. 3) entnehmen den entsprechenden Datenströmen DAS die Daten byteweise in der angegebenen Reihenfolge über die Koppeleinheiten K1 bis K6 (Fig. 3) und legen diese in den Speicherplätzen BY0 bis BY15 bzw. BY16 bis BY31 in der gleichen Reihenfolge im lokalen Speicher der Recheneinheiten RE1 bis RE3 (Fig. 3) ab, d.h. dass das Byte BY (N) des Datenstromes DAS im Speicherplatz BY0, das Byte BY (N+1) wird dem Speicherplatz BY1 zugewiesen, usw.

In Fig. 7 sind zwei in den lokalen Speichern der Recheneinheiten RE1 bis RE3 (Fig. 3) liegende Datensätze DS0 und DS1 dargestellt, wobei jeder Datensatz DS0 und DS1 dieses Ausführungsbeispieles aus vier Wörtern W0 bis W3 bzw. W4 bis W7 und jedes Wort W0 bis W7 aus vier Bytes besteht. Somit ergibt sich eine Wortlänge WL von 32 Bit. Die anfallenden Daten werden byteweise dem Datenstrom DAS (Fig. 6) entnommen und fortlaufend in den Datensätzen DS0 bzw. DS1 abgelegt. Ist einer der Datensätze DS0 bzw. DS1 vollständig mit neuen Daten beschrieben, so wird die Datenablage im anderen Datensatz DS1 bzw. DS0 fortgesetzt. In derjenigen Phase, in der ein Datensatz DS0 bzw. DS1 nicht beschrieben wird, läuft die Verarbeitung der Daten dieses Datensatzes DS0 bzw. DS1 ab. Auf diese Weise ist immer ein Datensatz DS0 bzw. DS1 in Bearbeitung, währenddem der andere mit neuen Daten beschrieben wird. Voraussetzung ist, dass ein Datensatz DS0 bzw. DS1 abschliessend bearbeitet werden kann, bevor der zweite wieder gefüllt ist. Um das zu erreichen, wird ein wie beispielsweise anhand der Fig. 3 beschriebenes paralleles Rechenwerk PRW verwendet, das eine entsprechende Leistungsfähigkeit aufweist. Die Ablagereihenfolge der einzelnen Bytes BY (Fig. 6) innerhalb eines Datensatzes DS0 bzw. DS1 erfolgt entsprechend der Nummerierung der Bytes BY0 bis BY15 bzw. BY16 bis BY31, d.h. die Bytes BY (Fig. 6) werden in einer Kolonne von oben nach unten und kolonnenweise von rechts nach links in die Datensätze DS0 bzw. DS1 abgelegt. Zur Verdeutlichung sind die in Fig. 6 speziell schraffierten relevanten Bit auch in die Fig. 7 übernommen worden.

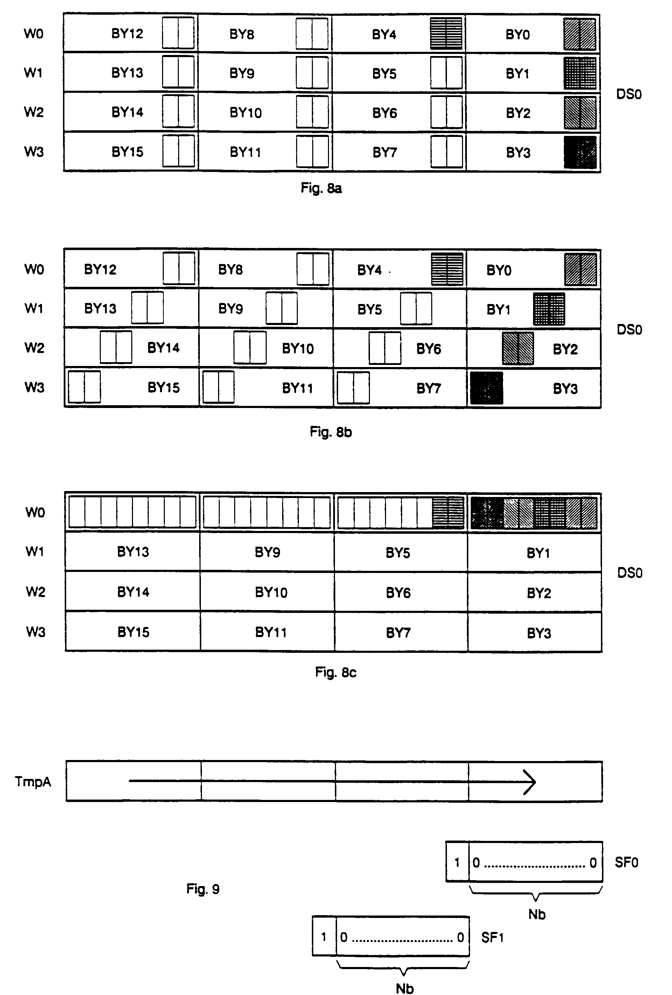

Fig. 8 zeigt drei weitere Verarbeitungsschritte des vollständig mit neuen Daten gefüllten Datensatzes DS0, wie sie in der zweiten Bitratenadaptionsstufe RA2 vorgenommen werden. In einem ersten Schritt wird der Inhalt der Wörter W1 bis W3 wie folgt nach links verschoben: das Wort W1 wird um zwei Bitpositionen, das Wort W2 wird um vier Bitpositionen und das Wort W3 wird um sechs Bitpositionen nach links verschoben. Das Wort W0 bleibt unverändert. Fig. 8b zeigt die durch die Verschiebung aus der Ausgangslage in Fig. 8a entstehende treppenförmige Anordnung der relevanten Daten im Datensatz DS0. Kennzeichnend ist, dass sich die relevanten Daten in vertikaler Richtung nicht überlappen, was die Voraussetzung für den zweiten Schritt ist: In diesem werden alle relevanten Daten der vier Wörter W0 bis W3 im Wort W0 zusammengefasst (Fig. 8c). Mit der Übergabe des Wortes W0 in ein Datenwort TmpA - dem eigentlichen dritten Schritt - wird die Adaption in der zweiten Bitratenadaptionsstufe RA2 abgeschlossen und neue Daten können in den Datensatz DS0 abgespeichert werden. Anschliessend erfolgt die Verarbeitung des Datensatzes DS1 in gleicher Weise, währenddem in den Datensatz DS0 wiederum neue Daten abgelegt werden. Nach diesen Verfahrensschritten ist die Übertragungsrate um den Faktor vier verkleinert worden: die Netzrate NR von 64 kBit/s ist auf die Zwischenübertragungsrate ZUR von 16 kBit/s reduziert worden.
In diesem Ausführungsbeispiel wurde von einer Wortlänge WL von 32 Bit ausgegangen. Werden, wie hier, vier Worte W0 bis W3 für einen Datensatz DS0 bzw. DS1 gewählt, so wird mit dem beschriebenen Verfahren gerade ein Wort W0 mit relevanten zusammenhängende Daten erhalten. Denkbar ist aber auch eine andere Wortlänge WL wie zum Beispiel 16 oder 64 Bit. Will man, wie im vorliegenden Ausführungsbeispiel, die relevanten Daten zusammenhängend in einem Wort ablegen, so ergibt sich die allgemeine Regel, wonach die Anzahl Wörter pro Datensatz DS0 bzw. DS1 gleich gross sein muss wie die Anzahl Bytes in einem Wort.

Zur Synchronisation des Datenstromes DAS (Fig. 6) mit den Verarbeitungsschritten der ersten Bitratenadaption RA1, ist im Datenstrom DAS nach einem bestimmten Synchronisationsbitmuster Nb zu suchen. Bei der vorliegenden V.24-lmplementation ist dies das Nullbyte, welches am Anfang und auch während dem Datentransfer in regelmässigen Abständen gesendet wird. Dieses Nullbyte muss zur Synchronisation eine bestimmte Position innerhalb des Datenwortes TmpA einnehmen. Im vorliegenden Ausführungsbeispiel ist die Synchronisation erreicht, wenn das niederwertigste Bit des Synchronisationsbitmusters Nb mit dem niederwertigsten Bit des Datenwortes TmpA in der Position übereinstimmt, d.h. wenn das Synchronisationsbitmuster Nb rechtsbündig im Datenwort TmpA zu liegen kommt. In Fig. 9 sind die zur Synchronisation notwendigen Schritte aufgezeigt: Der im Datenwort TmpA stehende Teil des in der zweiten Bitratenadaptionsstufe RA2 reduzierten Datenstromes DAS (Fig. 6) wird bei einer Wortlänge WL von 32 Bit und einer Synchronisationsbitmusterlänge von neun Bit vorzugsweise mit zwei stationären Suchfenstern SF0 und SF1, die mit dem jeweils gesuchten Bitmuster versehen sind, verglichen. Fällt der Vergleich mit beiden Suchfenstern SF0 und SF1 negativ aus, so wird das Datenwort TmpA um eine Position nach rechts verschoben. Anschliessend erfolgt wiederum ein Vergleich der im Datenwort TmpA stehenden Daten mit den in beiden stationären Suchfenstern SF0 und SF1 stehenden Daten. Stimmt der Inhalt des Suchfensters SF0 mit dem Inhalt des Datenwortes TmpA in der momentanen Position des Datenwortes TmpA überein, so ist der Anfang des relevanten Datenstromes erkannt und das Synchronisationsbitmuster Nb liegt rechtsbündig im Datenwort TmpA. Stimmt der Inhalt des Suchfensters SF1 mit dem Inhalt des Datenwortes TmpA in dieser Position überein, so muss das Datenwort TmpA im vorliegenden Ausführungsbeispiel um weitere acht Bitpositionen nach rechts verschoben werden, damit die Rechtsbündigkeit des Synchronisationsbitmusters Nb im Datenwort TmpA erfüllt ist. Neben diesen zur Synchronisation notwendigen Verfahrensschritten werden nichtrelevante Signale wie Ruhesignale, Breaksignale, etc. automatisch aus dem Datenstrom entfernt. Die nach der Synchronisation verbleibenden Daten beinhalten neben den Nutzdaten verschiedene Steuerdaten und zusätzliche Übertragungsdaten, wie sie in den Standards der CCITT-Normen vorgesehen sind.
Anstelle der zwei Suchfenster SF0 und SF1 kann auch nur ein Suchfenster SF0 verwendet werden. Es ist dann jedoch mit einer längeren Suchzeit zu rechnen, da im Durchschnitt mehr Vergleiche anzustellen sind, als bei mehreren örtlich verschobenen Suchfenstern SF0 und SF1. Auf der anderen Seite können aber auch zu viele örtlich verschobene Suchfenster für die Synchronisation eingesetzt werden. Wird die Anzahl der Suchfenster zu gross gewählt, so sinkt die Effizienz des Suchens, da einerseits die Anzahl der Vergleiche wieder ansteigt und andererseits ein grösserer Speicherbedarf für die Suchfenster benötigt wird.

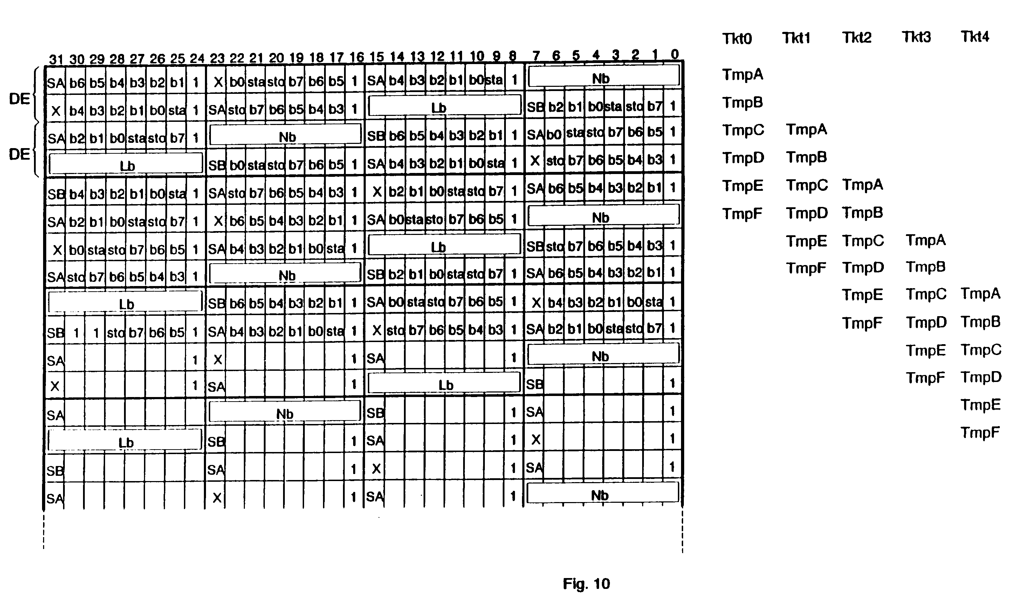

Fig. 10 zeigt den synchronisierten und in Dateneinheiten DE abgelegten Datenstom DAS vor der ersten Bitratenadaptionsstufe RA1 und mehrere bei der Verarbeitung in der ersten Bitratenadaptionsstufe RA1 verwendete Verarbeitungstakte Tkt0 bis Tkt4. Eine Dateneinheit DE ist beispielsweise aus zwei Datenworten TmpA und TmpB zusammengesetzt und wird in einem Verarbeitungstakt Tkt0 vollständig verarbeitet. Nach der Verarbeitung einer Dateneinheit DE werden die Datenworte TmpC und TmpD zu den neuen Datenworten TmpA und TmpB. Analog wird die Bezeichnung der restlichen Datenworte verschoben. Diese Umbenennung und Verschiebung ist in Fig. 10 für jeden der aufgeführten Verarbeitungstakte Tkt0 bis Tkt4 ersichtlich. Die in der Tabelle von Fig. 10 von der zweiten Bitratenadaptionsstufe RA2 stammenden Daten sind von rechts nach links in die von den Recheneinheiten RE1 bis RE3 vorgegebene Wortlänge WL von 32 Bit abgelegt. In der Tabelle sind die einzelnen Bit nach ihrer Funktion bezeichnet. Im Takt Tkt0 sind im Datenwort TmpA folgende Informationen vorhanden: Das Synchronisationsbitmuster Nb ist ein Nullbyte, in dem alle Bit auf Null gesetzt sind. Anschliessend folgt eine Eins, welche ebenfalls in das Suchfenster SF0 bzw. SF1 (Fig. 9) einbezogen werden kann. Mit einem Startbit sta wird der eigentliche Anfang von Nutzdaten b0 bis b7 angezeigt, die entsprechend dem Protokoll von V.24/V.28 durch weitere Steuerdaten wie SA, SB, X oder einer "1" unterbrochen werden. Nach dem letzten Bit der Nutzdaten b0 bis b7 wird als Abschluss jeweils ein Stopbit sto gesendet. Eine spezielle Informationseinheit bildet ein Leerbyte Lb, in dem weitere Steuerdaten codiert werden können. Dabei kann es sich zum Beispiel um die Codierung der Übertragungsgeschwindigkeit oder um andere im V.24/V.28-Standard vorgesehene Angaben handeln. Die beschriebenen Sequenzen ziehen sich nun über die ganze Tabelle von Fig. 10 hinweg und zeigen dabei eine regelmässige sich nach allen fünf Datenworten TmpA bis TmpE wiederholende Struktur des Datenstromes auf, die dazu verwendet werden kann, den Synchronisationszustand der Übertragung einfach zu überwachen. Erst wenn eine Überprüfung des Synchronisationszustandes negativ ausfällt, muss anhand des in Fig. 9 beschriebenen Verfahrens der Datenstrom neu synchronisiert werden.

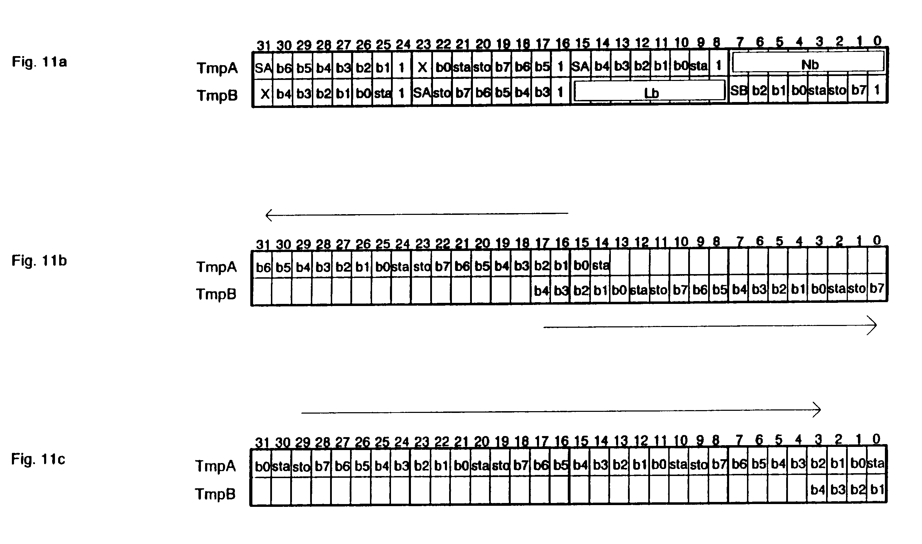

Fig. 11 zeigt eine Dateneinheit DE mit den beiden Datenworten TmpA und TmpB. Die Ausgangslage für drei aufeinander folgende und im gleichen Takt ablaufende Verarbeitungsschritte ist in Fig. 11a dargestellt. Darin ist der gleiche Dateninhalt für die Datenworte TmpA und TmpB wie in der Tabelle von Fig. 10 für Takt Tkt0 ersichtlich. In beiden Datenworten TmpA und TmpB werden nun alle Steuerdaten ausser den Start- und Stopbit sta bzw. sto entfernt. Die restlichen im Datenwort TmpA verbleibenden Daten werden linksbündig in die mit einem Pfeil oberhalb des Datenwortes TmpA vorgezeigte Richtung (Fig. 11b) verschoben, währenddem die restlichen im Datenwort TmpB verbleibenden Daten rechtsbündig in die mit einem Pfeil unterhalb des Datenwortes TmpB weisende Richtung (Fig. 11b) verschoben werden. Das Resultat dieser beschriebenen Ausführungen ist aus Fig. 11b ersichtlich. Dieses ist dann auch die Ausgangslage für die heute für die Recheneinheiten RE1 bis RE3 zur Verfügung stehenden Mikroprozessoren und deren spezielle Funktionen zur Links- bzw. Rechts-Verschiebung eines zusammengehängten Doppelwortes. Damit lässt sich der Inhalt der Dateneinheit DE von Fig. 11b zusammenhängend so weit nach rechts verschieben, bis die Daten in ihrer neuen Form sowohl im Datenwort TmpA als auch im Datenwort TmpB wieder rechtsbündig stehen. Die Verschiebungsrichtung ist durch den Pfeil oberhalb der Fig. 11c angedeutet.
Anstelle der in den vorangegangenen Verfahrensschritten unter Ausnützung der speziellen Funktionen verwendeten modernen Mikroprozessoren, kann das Verschieben der Datenworte TmpA bzw. TmpB auch einzeln vorgenommen werden. Der Nachteil liegt dann vor allem im längeren und aufwendigeren Verfahrensablauf.

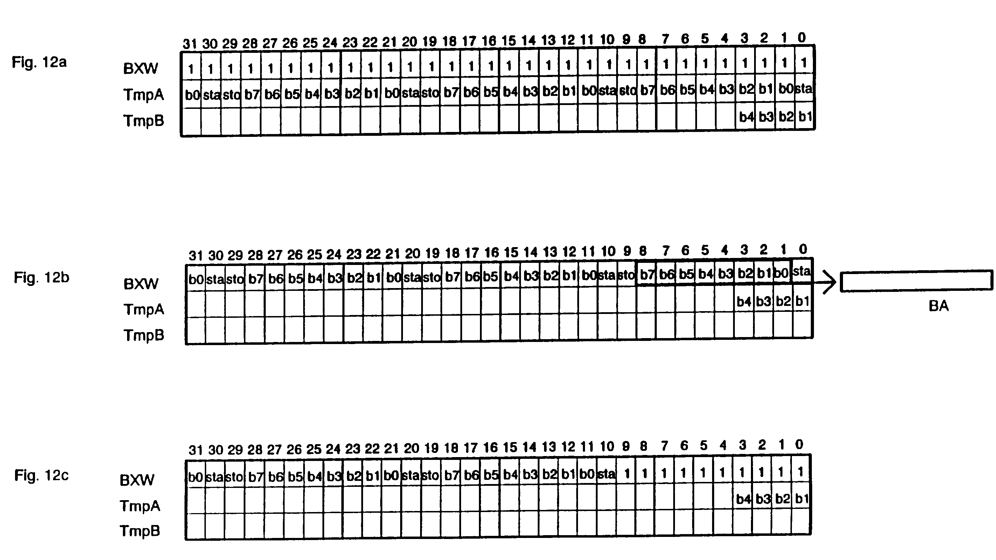

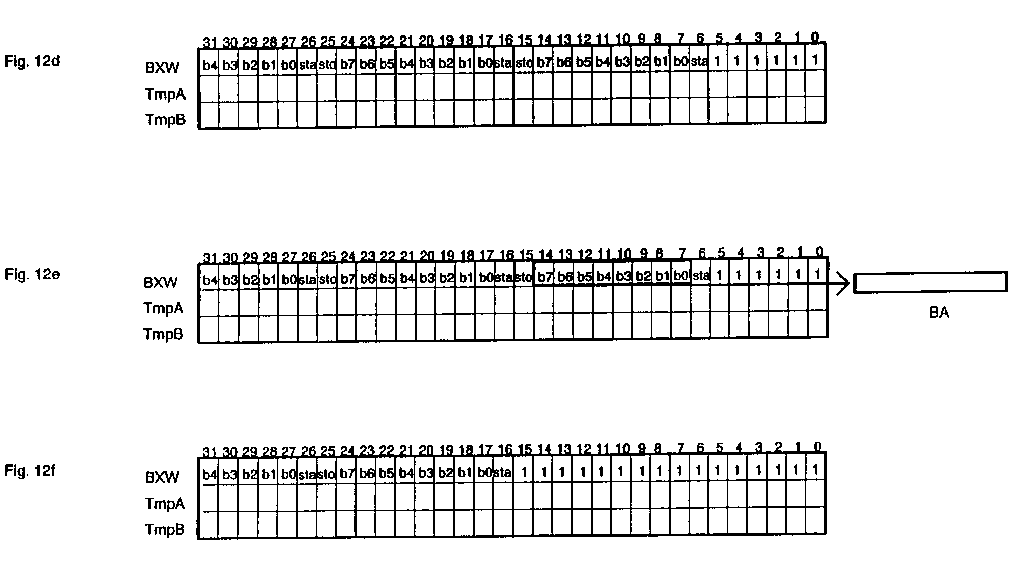

Fig. 12 zeigt die weiteren immer noch im gleichen Takt Tkt0 ablaufenden Verfahrensphasen, die als eigentliche Extraktionsphasen bezeichnet werden können. Die Nutzdaten b0 bis b7 werden nun aus dem aufbereiteten Datenstrom extrahiert und zur Weiterverarbeitung bzw. zur Interpretation an den zentralen Rechner ZR (siehe Fig. 3) bzw. an den Rechner R (Fig. 1, 2 und 4) weitergegeben. Zur Veranschaulichung dieses Vorganges wird ein zusätzliches Extraktionswort BXW oberhalb der Dateneinheit DE eingeführt. Das Extraktionswort BXW ist zu Beginn des Vorganges vollständig mit Einsen gefüllt, wie dies in Fig. 12a dargestellt ist. Durch die bereits beschriebene Rechts-Verschiebeoperation wird der Inhalt der Datenworte TmpA und TmpB rechtsbündig in das Extraktionswort BXW geschoben (Fig. 12b). Aus dem Extraktionswort BXW werden die Nutzdaten b0 bis b7 - schwarzer Rahmen von Fig. 12b - gelesen und über das Register BA weitergeleitet. Die im Extraktionswort BXW gelesenen Bitpositionen werden zusammen mit den entsprechenden Start- und Stopbit sta und sto mit Einsen überschrieben (siehe Fig. 12c). Sind weitere relevante Daten im Datenwort TmpA vorhanden, so werden diese so weit in das Extraktionswort BXW geschoben, bis das Datenwort TmpA keine relevanten Daten mehr enthält und bis im Extraktionswort BXW die Daten linksbündig anstehen (Fig. 12d). Nun wird in diesem Takt Tkt0 ein letztes Mal ein Byte Nutzdaten b0 bis b7 gelesen (Fig. 12e) und im Extraktionswort BXW wiederum durch Einsen ersetzt (Fig. 12f). Die Verarbeitung der momentanen Dateneinheit DE ist damit abgeschlossen und eine Neuzuweisung der Datenwortbezeichnung im nächsten Takt kann gemäss den Angaben von Fig. 10 vorgenommen werden.

Wie bereits erwähnt, erfolgt die Bitratenadaption gleichzeitig in beide Richtungen. Das anhand der Fig. 6 bis 12 erklärte Verfahren kann selbstverständlich auch in die andere Richtung angewendet werden, nämlich von der Datenrate DR zur Netzrate NR. Die entsprechenden Verfahrensschritte sind dabei lediglich in umgekehrter Reihenfolge anzuwenden mit der Vereinfachung, dass die anhand Fig. 9 beschriebenen Synchronisationsschritte nicht notwendig sind.

Die in den Datensätzen DS0 und DS1 (Fig. 7) der lokalen Speicher der Recheneinheiten RE1 bis RE3 (Fig. 3) zu verarbeitenden Daten des Datenstromes DAS (Fig. 6) können auch zuerst in einen beispielsweise mit FIFO (First In First Out)- Speicher realisierten Zwischenspeicher abgelegt und erst in einem zweiten Schritt in den lokalen Speicher der Recheneinheiten RE1 bis RE3 (Fig. 3) übertragen werden. Mit der Zwischenspeicherung der Daten ist die beschriebene abwechslungsweise Bearbeitung der Datensätzen DS0 und DS1 (Fig. 7) nicht erforderlich. Insbesondere können beide Datensätze DS0 und DS1 miteinander verarbeitet werden. Bei einer Verwendung des Siemens Bausteins HSCX zur Ausführung der Funktionen der Koppeleinheiten K1 bis K6 (Fig. 3) ist ein als FIFO-Speicher ausgebildeter Zwischenspeicher bereits integriert. Schliesslich ermöglicht der Zwischenspeicher auch eine Reduktion der Anzahl der Datensätze DS0 und DS1 (Fig. 7) auf einen einzigen Datensatz DS0 bzw. DS1.

Sämtliche Wortlängen WL sind im vorliegenden Ausführungsbeispiel für alle Variablen und Speichereinheiten mit 32 Bit angegeben. Die gezeigten Verfahrenschritte könne ohne weiteres auch an beliebig gewählte Wortlängen WL angepasst werden.

Selbstverständlich beschränkt sich die Erfindung nicht auf die Anwendung unter momentan geltenden ISDN-Normierungen, sondern kann auch bei geänderten Leistungsmerkmalen von ISDN oder in anderen Netzen bei gleicher Aufgabenstellung verwendet werden.

## Patentansprüche

1. Anordnung mit mindestens einem Rechner (R, R2, ... R4), mindestens einem digitalen Fernmeldenetz (OF;PF) und mindestens einer an eines der Fernmeldenetze (OF;PF) angeschlossenen Datensende- und Datenempfangseinrichtung, **dadurch gekennzeichnet,** dass mindestens eine Schnittstellenbaugruppe (SB) vorgesehen ist, die auf der einen Seite mit einem der Rechner (R, R2, R3) und auf der anderen Seite über einen Anschluss an einen Referenzpunkt (ST) mit einem der Fernmeldenetze (OF;PF) verbunden ist, dass die Schnittstellenbaugruppe (SB) aus einer Kanalzuweisungseinheit (KZE), einem parallelen Rechenwerk (PRW) und einer Busanpassungseinheit (BAE) besteht, dass im parallelen Rechenwerk (PRW) ein zentraler Rechner (ZR) und mindestens eine Recheneinheit (RE1) vorgesehen sind und dass das parallele Rechenwerk (PRW) alle Kanäle des Anschlusses gleichzeitig verarbeiten kann.

2. Anordnung nach Anspruch 1, **dadurch gekennzeichnet,** dass das Fernmeldenetz (OF;PF) nach ISDN-Normen standardisiert und der Anschluss an den Referenzpunkt (ST) ein Primärratenanschluss mit B-Kanal-Struktur ist.

3. Anordnung nach Anspruch 1 oder 2, **dadurch gekennzeichnet,** dass die Kanalzuweisungseinheit (KZE) eine Sende-Empfangseinheit (SE), einen Rahmensynchronisator (RS) sowie eine Durchschalteeinheit (DS) beinhaltet, dass die Sende-Empfangseinheit (SE) auf der einen Seite an den Anschluss bzw. an den Primärratenanschluss und auf der anderen Seite über den Rahmensynchronisator (RS) an die Durchschalteeinheit (DS) angeschlossen ist, dass die Durchschalteeinheit (DS) mit mindestens einer Koppeleinheit (K1,...,K6) verbunden ist und dass die Sende-Empfangseinheit (SE), der Rahmensynchronisator (RS) und die Durchschalteeinheit (DS) über einen Bus (TB) an den zentralen Rechner (ZR) angeschlossen sind.

4. Anordnung nach Anspruch 3, **dadurch gekennzeichnet,** dass die Durchschaltewege der Durchschalteeinheit (DS) durch ein Programm vorgegeben werden.

5. Anordnung nach einem der vorangehenden Ansprüche, **dadurch gekennzeichnet,** dass sowohl der zentrale Rechner (ZR) als auch vorhandene Recheneinheiten (RE1,RE2,RE3) des parallelen Rechenwerkes (PRW) aus je einem Transputer oder Signalprozessor bestehen.

6. Anordnung nach Anspruch 1 oder 2, **dadurch gekennzeichnet,** dass die Busanpassungseinheit (BAE) aus einer Speichereinheit (SE) und einer Bussteuereinheit (BS) besteht.

7. Anordnung nach Anspruch 1 oder 2, **dadurch gekennzeichnet,** dass entweder von der Datensende- oder Empfangseinrichtung aus über die digitalen Fernmeldenetze (OF,PF) oder über einen der Rechner (R, R2, ... R4) Ablaufprogramme in die Schnittstellenbaugruppe (SB) ladbar sind.

8. Anordnung nach Anspruch 1 oder 2, **dadurch gekennzeichnet,** dass die Schnittstellenbaugruppe (SB) modular aufgebaut ist und stufenweise der Anzahl der gleichzeitig auf den Rechner (R, R2, R3) zugreifenden Datensende- oder Empfangseinrichtungen angepasst werden kann.

9. Anordnung nach Anspruch 1 oder 2, **dadurch gekennzeichnet,** dass ein Netzwerk (NW) vorgesehen ist, das zumindest an einen der mit der Schnittstellenbaugruppe (SB) verbundenen Rechner (R, R2, R3) angeschlossen ist.

10. Anordnung nach Anspruch 9, **dadurch gekennzeichnet,** dass am Netzwerk (NW) mindestens ein vom Fernmeldenetz (OF;PF) unabhängiger Rechner (R4) angeschlossen ist.

11. Verwendung der Anordnung nach Anspruch 1 zur Bitratenadaption eines Datenkanals, über den Steuer- und/oder Nutzdaten in einem Datenstrom zwischen mindestens einem der Rechner (R, R2, ..., R4) und mindestens einer der Datensende- und Empfangseinrichtungen übertragen werden, indem der Datenstrom (DAS) in mindestens einem durch die Wortlänge (WL) einer Recheneinheit (RE1,RE2,RE3) vorgegebenen Datensatz (DS0,DS1) bzw. Dateneinheit (DE) aufgeteilt, die Nutzinformation aus dem Datensatz (DS0,DS1) bzw. aus der Dateneinheit (DE) extrahiert und an einen der Rechner (R,R2,R3,R4) übergeben wird.

12. Verwendung nach Anspruch 11, **dadurch gekennzeichnet,** dass die Bitratenadaption nach der CCITT-Empfehlung V.110 erfolgt.

13. Verwendung nach Anspruch 11 oder 12, **dadurch gekennzeichnet,** dass sowohl in Sendeals auch in Empfangsrichtung Daten übertragen werden und dass die Bitratenadaption in mindestens einer Stufe (RA2,RA1) erfolgt.

14. Verwendung nach einem der Ansprüche 11 bis 13, **dadurch gekennzeichnet,** dass in den Steuerdaten vorgesehene periodisch wiederkehrende Synchronisationsbitmuster (Nb) zur Synchronisation und zur Erkennung des Anfangs der relevanten Daten im Datenstrom (DAS) verwendet werden und dass zu dieser Synchronisation der Recheneinheit (RE1,RE2,RE3) mit dem Datenstrom (DAS) mindestens ein Suchfenster (SF0,SF1) vorgesehen ist.

15. Verwendung nach Anspruch 14, **dadurch gekennzeichnet,** dass eventuell vorkommende nicht relevante Daten im Datenstrom (DAS), wie zum Beispiel ein Ruhesignal, eliminiert werden.

16. Verwendung nach einem der Ansprüche 11 bis 15, **dadurch gekennzeichnet,** dass bei zweioder mehrstufiger Bitratenadaption (RA1,RA2) die letzte Stufe (RA2) mindestens einen Datensatz (DS0,DS1) enthält, dass der Datenstrom (DAS) fortlaufend in die Datensätze (DS0,DS1) abgelegt wird, dass bei mindestens zwei Datensätzen (DS0,DS1) diese nacheinander zur Ablage der Daten benützt werden, dass die Anzahl der Wörter (W0,...,W3;W4,...,W7) in einem Datensatz (DS0,DS1) der Anzahl Byte in einem Wort der Recheneinheit (RE1,RE2,RE3) entspricht und dass die einzelnen Wörter (W0,...,W3;W4,...,W7) dieser Datensätze (DS0,DS1) gegeneinander verschoben und in einem Wort (W0;W1) oder einem anderen gleich grossen Register zusammengefasst werden.

17. Verwendung nach Anspruch 11 oder 12, **dadurch gekennzeichnet,** dass alle Funktionen, insbesondere die Überprüfung des Synchronisationszustandes zwischen Datenstrom (DAS) und Recheneinheit (RE1,RE2,RE3), während dem Ablauf der Bitratenadaption getestet werden.

18. Verwendung nach einem der Ansprüche 11 bis 17, **dadurch gekennzeichnet,** dass die Steuerdaten des Datenstromes (DAS) teilweise oder ganz eliminiert werden.

19. Verwendung nach einem der Ansprüche 16 bis 18, **dadurch gekennzeichnet,** dass eine Dateneinheit (DE) aus mindestens einem Datenwort (TmpA,...,TmpF) besteht, dass der Inhalt der Dateneinheiten (DE) in einem Extraktionswort (BXW) zwischengespeichert und erst dann in den Rechner (R;R2,R3,R4) übergeben wird.

20. Verwendung nach einem der Ansprüche 16 bis 19, **dadurch gekennzeichnet,** dass der Ablauf in Takten (Tkt0,Tkt1,....) erfolgt und dass pro Takt mindestens eine Dateneinheit (DE) verarbeitet wird.

21. Verwendung nach einem der Ansprüche 11 bis 20, **dadurch gekennzeichnet,** dass mehrere Datenkanäle mit dem entsprechenden Datenstrom (DAS) in der gleichen Recheneinheit (RE1,RE2,RE3) verarbeitet werden.

## Claims

1. Arrangement having at least one computer (R, R2, ... R4), at least one digital telecommunications network (OF; PF) and at least one data transmitting and data receiving device connected to one of the telecommunications networks (OF; PF), characterised in that there is provided at least one interface module (SB), which on the one side is connected to one of the computers (R, R2, R3) and on the other side is connected, by way of a connection to a reference point (ST), to one of the telecommunications networks (OF; PF), in that the interface module (SB) consists of a channel allocation unit (KZE), a parallel arithmetic element (PRW) and a bus matching unit (BAE), in that there are provided in the parallel arithmetic element (PRW) a central computer (ZR) and at least one arithmetic unit (RE1), and in that the parallel arithmetic element (PRW) can process all channels of the connection simultaneously.

2. Arrangement according to claim 1,
characterised in that the telecommunications network (OF; PF) is standardised according to ISDN standards, and the connection to the reference point (ST) is a primary rate connection with B-channel-structure.

3. Arrangement according to claim 1 or 2,
characterised in that the channel allocation unit (KZE) contains a transmitter-receiver unit (SE), a frame synchroniser (RS) and also a switching unit (DS), in that the transmitter-receiver unit (SE) is connected, on the one side, to the connection or to the primary rate connection and on the other side is connected, by way of the frame synchroniser (RS), to the switching unit (DS), in that the switching unit (DS) is connected to at least one connecting unit (K1, ..., K6), and in that the transmitter-receiver unit (SE), the frame synchroniser (RS) and the switching unit (DS) are connected by way of a bus (TB) to the central computer (ZR).

4. Arrangement according to claim 3,
characterised in that the switching paths of the switching unit (DS) are predetermined by a program.

5. Arrangement according to one of the preceding claims, characterised in that both the central computer (ZR) and also available arithmetic units (RE1, RE2, RE3) of the parallel arithmetic element (PRW) consist of a respective transputer or signal processor.

6. Arrangement according to claim 1 or 2,
characterised in that the bus matching unit (BAE) consists of a memory unit (SE) and a bus control unit (BS).

7. Arrangement according to claim 1 or 2,
characterised in that sequential programs can be loaded into the interface module (SB) either starting from the data transmitting or receiving device via the digital telecommunications networks (OF, PF) or via one of the computers (R, R2, ... R4).

8. Arrangement according to claim 1 or 2,
characterised in that the interface module (SB) is constructed in a modular manner and can be matched in stages to the number of data transmitting or receiving devices that access the computer (R, R2, R3) simultaneously.

9. Arrangement according to claim 1 or 2,
characterised in that there is provided a network (NW) which is connected to at least one of the computers (R, R2, R3) that are connected to the interface module (SB).

10. Arrangement according to claim 9,
characterised in that connected to the network (NW) is at least one computer (R4) which is independent of the telecommunications network (OF; PF).

11. Use of the arrangement according to claim 1 for bit rate adaptation of a data channel, by way of which data channel control data and/or user data is transferred in a data stream between at least one of the computers (R, R2, ..., R4) and at least one of the data transmitting and receiving devices, in which connection the data stream (DAS) is divided into at least one data record (DS0, DS1) or data unit (DE) which is predetermined by the word length (WL) of an arithmetic unit (RE1, RE2, RE3), the useful information is extracted from the data record (DS0, DS1) or from the data unit (DE) and is passed to one of the computers (R, R2, R3, R4).

12. Use according to claim 11, characterised in that the bit rate adaptation takes place according to the CCITT recommendation V.110.

13. Use according to claim 11 or 12,
characterised in that data is transferred both in the direction of transmitting and in the direction of receiving, and in that the bit rate adaptation takes place in at least one stage (RA2, RA1).

14. Use according to one of the claims 11 to 13, characterised in that periodically recurring synchronisation bit patterns (Nb), provided in the control data, for synchronisation and for recognition of the start of the relevant data in the data stream (DAS) are used, and in that to achieve this synchronisation of the arithmetic unit (RE1, RE2, RE3) with the data stream (DAS), at least one search window (SF0, SF1) is provided.

15. Use according to claim 14, characterised in that non-relevant data which may arise in the data stream (DAS), such as a rest signal for example, is eliminated.

16. Use according to one of the claims 11 to 15, characterised in that in the case of two-stage or multiple-stage bit rate adaptation (RA1, RA2), the last stage (RA2) contains at least one data record (DS0, DS1), in that the data stream (DAS) is filed continuously into the data records (DS0, DS1), in that in the case of at least two data records (DS0, DS1), the latter are used one after the other for filing the data, in that the number of words (W0, ..., W3; W4, ..., W7) in a data record (DS0, DS1) corresponds to the number of bytes in a word of the arithmetic unit (RE1, RE2, RE3), and in that the individual words (W0, ..., W3; W4, ..., W7) of these data records (DS0, DS1) are shifted with respect to each other and combined in one word (W0; W1) or another register which is of the same size.

17. Use according to claim 11 or 12,
characterised in that all functions, in particular the testing of the synchronisation state between data stream (DAS) and arithmetic unit (RE1, RE2, RE3), are tested during the course of the bit rate adaptation.

18. Use according to one of the claims 11 to 17, characterised in that the control data of the data stream (DAS) is eliminated partly or completely.

19. Use according to one of the claims 16 to 18, characterised in that a data unit (DE) consists of at least one data word (TmpA, ..., TmpF), in that the contents of the data units (DE) are stored intermediately in an extraction word (BXW) and are only then passed to the computer (R; R2, R3, R4).

20. Use according to one of the claims 16 to 19, characterised in that the sequence takes place in phases (Tkt0, Tkt1, ...), and in that at least one data unit (DE) is processed per phase.

21. Use according to one of the claims 11 to 20, characterised in that a plurality of data channels having the corresponding data stream (DAS) are processed in the same arithmetic unit (RE1, RE2, RE3).

## Revendications

1. Dispositif comportant au moins un ordinateur (R, R2, ..., R4), au moins un réseau de télécommunication numérique (OF ; PF) et au moins un dispositif émetteur récepteur de données raccordé à un des réseaux de télécommunication (OF ; PF), **caractérisé par le fait qu**'il est prévu au moins un module d'interface (SB) qui est relié d'un côté à un des ordinateurs (R, R2, R3) et de l'autre côté, par l'intermédiaire d'un raccordement à un point de référence (ST), à un des réseaux de télécommunication (OF ; PF), que le module d'interface (SB) est constitué d'une unité d'affectation de canal (KZE), d'un calculateur parallèle (PRW) et d'une unité d'adaptation au bus (BAE), qu'il est prévu dans le calculateur parallèle (PRW) un ordinateur central (ZR) et au moins une unité de calcul (RE1), et que le calculateur parallèle (PRW) peut traiter tous les canaux du raccordement en même temps.

2. Dispositif selon la revendication 1, **caractérisé par le fait que** le réseau de télécommunication (OF ; PF) est normalisé selon des normes RNIS et que le raccordement au point de référence (ST) est un raccordement de débit primaire avec une structure à canal B.

3. Dispositif selon la revendication 1 ou 2, **caractérisé par le fait que** l'unité d'affectation de canal (KZE) contient une unité émettrice réceptrice (SE), un synchronisateur de trame (RS) ainsi qu'une unité d'intercommunication (DS), que l'unité émettrice réceptrice (SE) est raccordée d'un côté au raccordement c'est-à-dire au raccordement de débit primaire et de l'autre côté par l'intermédiaire du synchronisateur de trame (RS) à l'unité d'intercommunication (DS), que l'unité d'intercommunication (DS) est reliée au moins à une unité de connexion (K1, ..., K6), et que l'unité émettrice réceptrice (SE), le synchronisateur de trame (RS) et l'unité d'intercommunication (DS) sont raccordés par l'intermédiaire d'un bus (TB) à l'ordinateur central (ZR).

4. Dispositif selon la revendication 3, **caractérisé par le fait que** les voies d'intercommunication de l'unité d'intercommunication (DS) sont prescrites par un programme.

5. Dispositif selon l'une des revendications précédentes, **caractérisé par le fait qu**'aussi bien l'ordinateur central (ZR) que des unités de calcul présentes (RE1, RE2, RE3) du calculateur parallèle (PRW) consistent chacun en un transputer ou en un processeur de signaux.

6. Dispositif selon la revendication 1 ou 2, **caractérisé par le fait que** l'unité d'adaptation au bus (BAE) est constituée d'une unité de mémoire (SE) et d'une unité de commande de bus (BS).

7. Dispositif selon la revendication 1 ou 2, **caractérisé par le fait que** des programmes séquentiels peuvent être chargés dans le module d'interface (SB) soit depuis le dispositif émetteur récepteur de données par l'intermédiaire des réseaux de télécommunication numériques (OF, PF) soit par l'intermédiaire d'un des ordinateurs (R, R2, ..., R4).

8. Dispositif selon la revendication 1 ou 2, **caractérisé par le fait que** le module d'interface (SB) a une structure modulaire et peut être adapté par degrés au nombre des dispositifs émetteurs récepteurs de données ayant accès en même temps à l'ordinateur (R, R2, R3).

9. Dispositif selon la revendication 1 ou 2, **caractérisé par le fait qu'**il est prévu un réseau (NW) qui est raccordé au moins à un des ordinateurs (R, R2, R3) reliés au module d'interface (SB).

10. Dispositif selon la revendication 9, **caractérisé par le fait qu**'au moins un ordinateur (R4) indépendant du réseau de télécommunication (OF ; PF) est raccordé au réseau (NW).

11. Utilisation du dispositif selon la revendication 1 pour l'adaptation de débit binaire d'un canal de données par l'intermédiaire duquel des données de commande et/ou des données utiles sont transmises dans un flux de données entre au moins l'un des ordinateurs (R, R2, ..., R4) et au moins l'un des dispositifs émetteurs récepteurs de données, le flux de données (DAS) étant divisé en au moins un ensemble de données (DS0, DS1) ou unité de données (DE), prédéterminé par la longueur de mot (WL) d'une unité de calcul (RE1, RE2, RE3), et l'information utile étant extraite de l'ensemble de données (DS0, DS1) ou de l'unité de données (DE) et étant transmise à un des ordinateurs (R, R2, R3, R4).

12. Utilisation selon la revendication 11, **caractérisée par le fait que** l'adaptation de débit binaire s'effectue selon la recommandation du CCITT V. 110.

13. Utilisation selon la revendication 11 ou 12, **caractérisée par le fait que** des données sont transmises aussi bien dans le sens de l'émission que dans le sens de la réception et que l'adaptation de débit binaire s'effectue au moins dans un étage (RA2, RA1).

14. Utilisation selon l'une des revendications 11 à 13, **caractérisée par le fait que** des configurations binaires de synchronisation (Nb) se reproduisant périodiquement dans les données de commande sont utilisées pour la synchronisation et pour la détection du début des données significatives dans le flux de données (DAS) et qu'au moins une fenêtre de recherche (SF0, SF1) est prévue pour cette synchronisation de l'unité de calcul (RE1, RE2, RE3) avec le flux de données (DAS).

15. Utilisation selon la revendication 14, **caractérisée par le fait que** des données non significatives apparaissant éventuellement dans le flux de données (DAS), comme un signal de repos par exemple, sont éliminées.

16. Utilisation selon l'une des revendications 11 à 15, **caractérisée par le fait que**, dans le cas d'une adaptation de débit binaire à deux ou plusieurs étages (RA1, RA2), le dernier étage (RA2) contient au moins un ensemble de données (DS0, DS1), que le flux de données (DAS) est enregistré en continu dans les ensembles de données (DS0, DS1), que, dans le cas où au moins deux ensembles de données (DS0, DS1) sont présents, ceux-ci sont utilisés l'un après l'autre pour l'enregistrement des données, que le nombre des mots (W0, ..., W3 ; W4, ..., W7) dans un ensemble de données (DS0, DS1) correspond au nombre d'octets dans un mot de l'unité de calcul (RE1, RE2, RE3) et que les différents mots (W0, ..., W3 ; W4, ..., W7) de ces ensembles de données (DS0, DS1) sont décalés les uns par rapport aux autres et sont rassemblés dans un mot (W0 ; W1) ou dans un autre registre de même grandeur.

17. Utilisation selon la revendication 11 ou 12, **caractérisée par le fait que** toutes les fonctions, notamment le contrôle de l'état de synchronisation entre le flux de données (DAS) et l'unité de calcul (RE1, RE2, RE3), sont testées pendant le déroulement de l'adaptation de débit binaire.

18. Utilisation selon l'une des revendications 11 à 17, **caractérisée par le fait que** les données de commande du flux de données (DAS) sont partiellement ou complètement éliminées.

19. Utilisation selon l'une des revendications 16 à 18, **caractérisée par le fait qu**'une unité de données (DE) est constituée d'au moins un mot de données (TmpA, ..., TmpF), et que le contenu des unités de données (DE) est mémorisé temporairement dans un mot d'extraction (BXW) et n'est transféré qu'ensuite dans l'ordinateur (R ; R2, R3, R4).

20. Utilisation selon l'une des revendications 16 à 19, **caractérisée par le fait que** l'exécution s'effectue en cadences (Tkt0, Tkt1, ...) et qu'au moins une unité de données (DE) est traitée pour chaque cadence.

21. Utilisation selon l'une des revendications 11 à 20, **caractérisée par le fait que** plusieurs canaux de données avec le flux de données (DAS) correspondant sont traités dans la même unité de calcul (RE1, RE2, RE3).
